# EUROPEAN PATENT SPECIFICATION

(11) **EP 2 134 973 B1**
(45) Date of publication and mention of the grant of the patent: **25.09.2013**
(21) Application number: 08718547.6
(22) Date of filing: 27.02.2008
(51) Int. Cl.: F16B 3/06, F16D 1/08, F16D 1/093, F16D 1/033

(54) **CONNECTION ARRANGEMENT AND A LOCKING BOLT INCLUDED THEREIN**
VERBINDUNGSANORDNUNG MIT EINEM SCHRAUBENBOLZEN
DISPOSITIF DE RACCORD ET BOULON DE VERROUILLAGE COMPRIS DANS CELUI-CI

(30) Priority: 08.03.2007 FI 20075160
(43) Date of publication of application: 23.12.2009
(73) Proprietor: Wärtsilä Finland Oy, 65380 Vaasa (FI)
(72) Inventor: NYNÄS, Håkan, FI-65280 Vasa (FI)
(74) Representative: Berggren Oy Ab
(86) International application number: PCT/FI2008/050094
(87) International publication number: WO 2008/107516

(56) References cited:
- EP-A- 0 824 202
- DE-A1- 3 938 813
- DE-C- 509 460
- GB-A- 1 544 540
- US-A- 5 775 831

## Description

The present invention relates to a connection arrangement according to the preamble of claim 1 for connecting and locking machine elements or the like to each other, the first machine element containing a bore extending therethrough and the second machine element containing a bore closed at its second end and in which the said bores are arranged to be provided with a locking bolt or the like having an adapter socket or the like, whereby the locking bolt is essentially arranged inside the adapter socket. The present invention also relates to a locking bolt according to claim 5 being a part of the connection arrangement.

It is previously known to use locking pins comprising conical surfaces for achieving locking and centering of machine elements to each other. This allows a locking pin to be made self-locking subsequent to tightening. One such solution is shown in EP 0824202 B1. This solution comprises a cylindrical socket having an adapter bolt inside, whereby the conical surfaces between the socket and the adapter bolt cause the socket and adapter bolt to stay tightly attached to the bores of the machine elements. This solution functions well as such provided that the shape changes of the material are very small at the most. Thus it is best usable in as static connections as possible. The solution further requires separate installation arrangements during both locking and releasing the connection. In order to release the connection a separate end piece that can only be used by means of a separate tool extending through the locking arrangement must be provided in advance to the closed end of the bores. Thus the solution is too complex and it slows down the installation and removing of the connection.

The aim of the present invention is to produce an improved connection arrangement for attaching and locking into each other machine elements or the like, in which solution the disadvantages of the above-mentioned prior art have been essentially eliminated. An especial aim of the invention is to produce a connection solution that is as simple as possible, easy and quick to install and remove and does not necessitate the use of special tools. Another aim is to produce a solution well suited for machine elements subjected to dynamic loads and in some shape changes can occur as well.

The aims of the invention are achieved as described in claims 1 and 5 and as disclosed in more detail in other claims. According to the invention, the first end of the locking bolt in the side of the closed bore can be connected with threads to the inside of the said closed bore. The second end of the locking bolt is provided with an expansion part having engagement means for a suitable tool for transmitting torque to the locking bolt as well as a guide surface arranged to have an effect on the radially extending engagement surface of the corresponding end of the adapter socket in the closed position. The shell of the adapter socket additionally comprises a conical surface arranged to cooperate with corresponding conical surfaces arranged inside the said bores, whereby the said conical surfaces decrease in diameter towards the said closed end of the bore.

The solution according to the invention can be easily and quickly locked and released with conventional tools, such as a screwdriver or an Allen key. As the inside end of the locking bolt is connected by threads to the machine element comprising the closed bore and additionally the conical surfaces are constantly tightly engaged to each other due to tightening of the locking bolt, the connection remains closed despite any reasonable shape changes of the materials due to dynamic loads. By suitably designing the free end of the locking bolt the solution can also be used for flush installations in bores.

By arranging a flange means between the adapter socket and the threaded portion in the said first end of the locking bolt it can be preferably arranged to cooperate with the corresponding end of the adapter socket when releasing the locking of the connection arrangement. Thus, no separate pieces used in connection with the release of the connection are needed in the closed end of the bore.

In practice the axial dimension of the adapter socket is slightly shorter than the distance between the locking bolt and the flange means so that an axial clearance is formed between the adapter socket and the locking bolt, the clearance being on the different sides of the adapter socket during locking of and on the other hand releasing the connection arrangement. This also ensures the possibility of sufficiently tightening the locking bolt so that the adapter socket is sufficiently pressed against the engagement surface and it can correspondingly be released therefrom.

Preferably the adapter socket comprises at least two parts arranged radially around the locking bolt and which together form a truncated cone. Thus the adapter socket can easily be installed over the locking bolt despite the locking bolt being provided with the said flange means for releasing the connection.

The present invention also relates to a locking bolt included in the connection arrangement, the first end of which is provided with threads and the second, opposite, end of which comprises an expansion part having engagement means for a suitable tool for transmitting torque to the locking bolt and that also comprises a radially extending guide surface. The locking bolt is additionally provided with an adapter socket provided between its ends, at least one end of the adapter socket comprising a radially extending engagement surface for the locking bolt and the outer shell of which comprising a conical surface arranged so that its diameter decreases towards the said first end of the locking bolt.

The said first end of the locking bolt comprises a flange means provided between the threaded part and the adapter socket, the flange means having a guide surface for the adapter socket. The connection can be easily disconnected by utilizing the flange means. The axial dimension of the adapter socket is slightly shorter than the distance between the expansion part of the locking bolt and the flange means so that a clearance is formed between the adapter socket and the locking bolt. Due to these arrangements the adapter socket comprises at least two parts arranged extending radially opposite around the locking bolt. The shell surface of the parts of the adapter socket include a groove extending cross-wise in relation to the locking bolt, with a locking ring or the like installed in the groove for keeping the parts of the adapter socket in place over the locking bolt during installation.

In the following, the invention is described in more detail with reference to the appended schematic drawings, in which
figure 1 illustrates a connection arrangement according to the invention as an axial sectional view when accomplishing the locking,
figure 2 illustrates the connection arrangement of figure 1 during release,
- figure 3 illustrates section III-III of figure 2.

In the drawing, reference numeral 1 refers to the first machine element having a bore 1a comprising a conical part 1b, and reference numeral 2 refers to the second machine element 2 having a bore 2a, closed at its second end and comprising a conical part 2b. In order to connect the machine elements 1 and 2 to each other by means of bores 1 a and 2a a locking bolt 3 having an adapter socket 7 is installed.

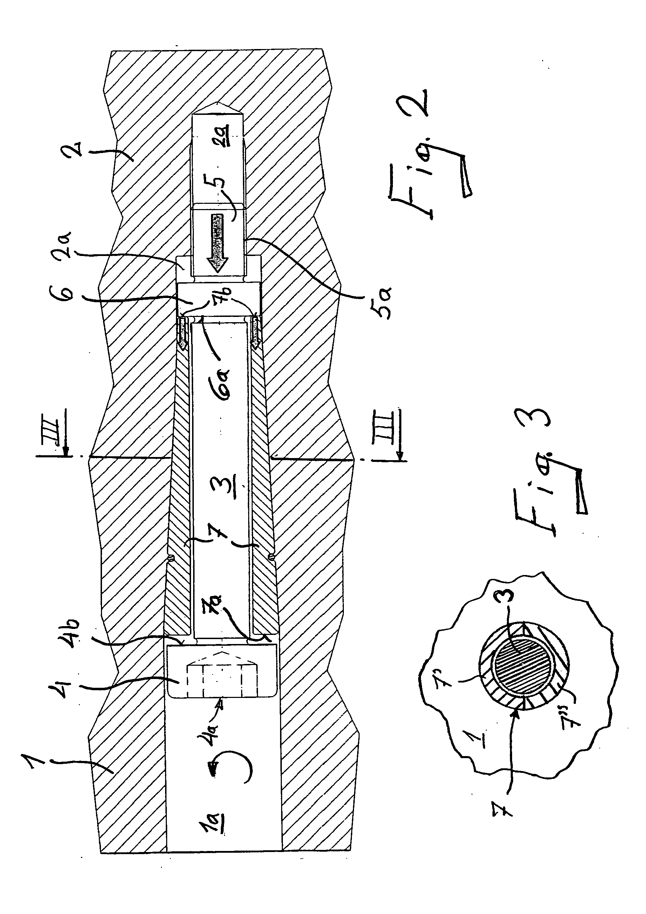

The first end 5 of the locking bolt 3 in the side of the of the closed bore 2a is provided with a threaded part 5a by means of which the locking bolt 3 is connected to corresponding threads in the inside end of the bore 2a and thus to the actual machine element 2. The locking bolt comprises a flange means 6 having a radial guide surface 6a in connection with the end 5. The second end of the locking bolt 3 is provided with an expansion part 4 having engagement means 4a for a suitable tool, such as a hexagon spanner or a screwdriver for transmitting torque to the locking bolt 3. The expansion part also comprises a guide surface 4b. An adapter socket 7 is provided over the locking bolt, the socket comprising two different parts 7' and 7" in the illustrated embodiment (cf. figure 3), the parts being installed into the locking bolt 3 in radial direction from various sides thereof and attached to each other by means of a lock ring 9 installed in a circumferential groove 8.

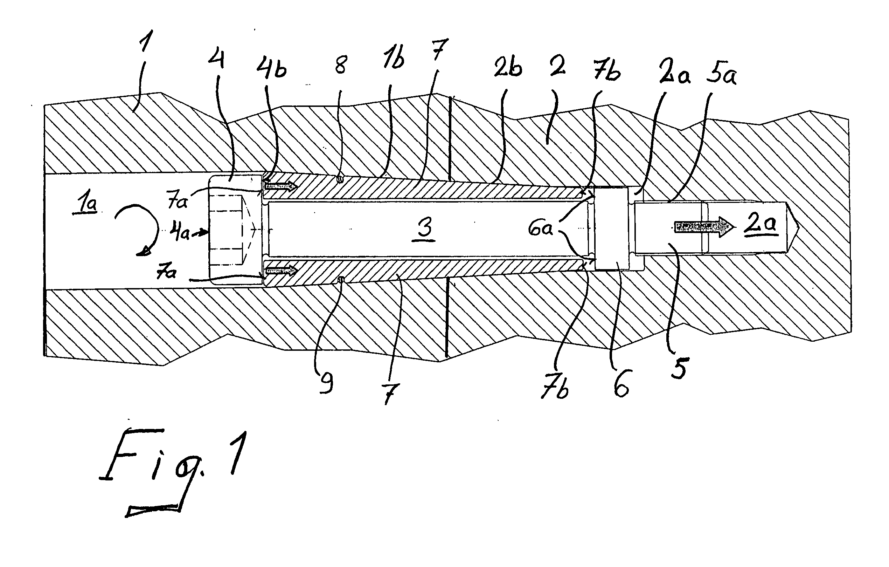

Referring to figure 1, the locking is accomplished as follows. The locking bolt 3 is rotated by means of a suitable tool (not shown) via engagement means 4a in the direction shown with the arrows, whereby the locking bolt 3 moves deeper in bores 1 a and 2a urged by the threaded part 5a in the direction shown with the arrows. Simultaneously the guide surface 4b is pressed against the engagement surface 7a of the adapter socket 7, as shown with arrows, and the adapter socket 7 is pressed along its conical surface 7c tightly against the conical parts 1b and 2b of the bores. A permanent force remains in the adapter socket 7 to effect on the conical surfaces 1b and 2b because of the tightened locking bolt 3, whereby the connection arrangement prevents opening of the locking bolt 3.

When it is desired to open the connection, the locking bolt 3 is correspondingly rotated in other direction as shown in figure 2 with an arrow. In this case the threaded part 5a moves the locking bolt axially in relation to the adapter socket (see arrow) so that the guide surface 6a of the flange means 6 of the locking bolt is tightly pressed against the engagement surface 7b of the adapter socket 7. When rotation is continued, the locking bolt 3 presses the adapter socket 7 off from the conical surfaces 1 b and 2b of the bores to the direction shown with arrows, whereby the locking bolt can be released. Thus the locking and releasing can be accomplished using the same tool by rotating it in different directions.

During both locking and releasing a certain clearance is formed between the adapter socket 7 and the locking bolt 3 making it possible for these parts to move in relation to each other in axial direction and thus making it possible for the adapter socket 7 to be pressed tightly into the bores during locking and correspondingly to release the adapter socket 7 from the bores during release of the connection.

The invention can be applied to, for example, axial connections, gear wheel connections and connecting the various pieces of a built-up piston to each other. In the embodiment of the figures the locking bolt is fully flush with the bores of the machine elements, but depending on the application, the expansion part 4 of the locking bolt, for example, can as well remain outside the bore. The engagement means 4a formed on the expansion part can naturally be shaped according to the desired installation tool during the installation. Thus, the invention is not limited to the disclosed embodiment, but several modifications thereof can be conceived of within the appended claims.

## Claims

1. A connection arrangement for connecting and locking machine elements or the like to each other, in which the first machine element (1) comprises a bore (1 a) extending therethrough and the second machine element (2) comprising a bore (2a) closed at its second end and in which the said bores are arranged for installation of a locking bolt (3) or the like having an adapter socket (7) therein, whereby the locking bolt (3) is essentially arranged inside the adapter socket (7), **characterized in that** the first end (5) of the locking bolt (3) in the side of the closed bore is provided with a threaded part (5a) for connection to the inside of the said closed bore (2a) said threaded part (5a) being arranged to be utilised both during locking and releasing the connection arrangement, the second end of the locking bolt (3) being provided with an expansion part (4) having engagement means (4a) for a suitable tool for transmitting torque to the locking bolt (3) as well as a guide surface (4b) arranged to effect in the locked position of the connection arrangement on a radially extending engagement surface (7a) of the corresponding end of the adapter socket (7), and that the shell of the said adapter socket (7) additionally comprises a conical surface (7c) arranged to cooperate with corresponding conical surfaces (1b, 2b) arranged inside the said bores, whereby the said conical surfaces (1b, 2b, 7c) decrease in diameter towards the said closed end of the bore.

2. A connection arrangement according to claim 1, **characterized in that** the said first end (5) of the locking bolt (3) between the adapter socket (7) and the threaded part (5a) comprises a flange means (6) arranged to cooperate with the corresponding end of the adapter socket (7) when releasing the locking of the connection arrangement.

3. A connection arrangement according to claim 2, **characterized in that** the axial dimension of the adapter socket (7) is slightly shorter than the distance between the expansion part (4) of the locking bolt and the flange means (6) so that an axial clearance is formed between the adapter socket (7) and the locking bolt (3), the clearance being on different sides of the adapter socket (7) during locking and releasing the connection arrangement.

4. A connection arrangement according to any of the above claims, **characterized in that** the adapter socket (7) comprises at least two parts (7', 7") arranged in radial direction around the locking bolt (3) and they together form a truncated cone.

5. A locking bolt (3) in a connection arrangement according to any one of the above claims, **characterized in that** its first end (5) is provided with a threaded part (5a) and its second, opposite, end comprises an expansion part (4) having engagement means (4a) for a suitable tool for transmitting torque to the locking bolt (3) and being provided with a radially extending guide surface (4b), that it is provided with an adapter socket (7) arranged between the first and the second ends and the outer shell of which comprising a conical surface (7c) arranged so as to decrease in diameter towards the first end (5) of the locking bolt (3), the adapter socket (7) comprising a radially extending engagement surface (7a) for the locking bolt (3) at least in one end, and that a flange means (6) is arranged in the said first end (5) between the threaded part (5a) and the adapter socket (7) and having a guide surface (6a) for the adapter socket (7).

6. A locking bolt according to claim 5, **characterized in that** the axial dimension of the adapter socket (7) is slightly shorter than the distance between the expansion part (4) of the locking bolt and the flange means (6) so that an axial clearance is formed between the adapter socket (7) and the locking bolt (3).

7. A locking bolt according to claim 5 or 6, **characterized in that** the adapter socket (7) comprises at least two parts (7', 7") arranged radially around the locking bolt (3).

8. A locking bolt according to claim 7, **characterized in that** the shell surface (7c) of the parts (7', 7") of the adapter socket comprise a groove perpendicular to the locking bolt, with a lock ring (9) or the like being installed in the groove for keeping the parts (7', 7") of the locking bolt (3) together during installation.

## Patentansprüche

1. Verbindungsanordnung zum Verbinden und Sperren von Maschinenelementen oder dergleichen aneinander, wobei das erste Maschinenelement (1) eine Bohrung (1a) umfasst, die dort hindurch verläuft, und das zweite Maschinenelement (2) eine Bohrung (2a) umfasst, die an ihrem zweiten Ende geschlossen ist, und wobei die Bohrungen zur Einrichtung eines Schraubenbolzens (3) oder dergleichen mit einer Adapterfassung (7) darin angeordnet sind, wobei der Schraubenbolzen (3) im Wesentlichen innerhalb der Adapterfassung (7) angeordnet ist, **dadurch gekennzeichnet, dass** das erste Ende (5) des Schraubenbolzens (3) in der Seite der geschlossenen Bohrung mit einem Gewindeteil (5a) zur Verbindung mit der Innenseite der geschlossenen Bohrung (2a) versehen ist, wobei das Gewindeteil (5a) zur Nutzung sowohl während des Sperrens als auch des Freigebens der Verbindungsanordnung angeordnet ist, das zweite Ende des Schraubenbolzens (3) mit einem Erweiterungsteil (4) versehen ist, welches Eingriffsmittel (4a) für ein geeignetes Werkzeug zum Übertragen von Drehmoment auf den Schraubenbolzen (3) sowie eine Führungsfläche (4b) aufweist, die zum Einwirken in der gesperrten Position der Verbindungsanordnung auf eine radial verlaufende Eingriffsfläche (7a) des entsprechenden Endes der Adapterfassung (7) angeordnet ist, und dass die Ummantelung der Adapterfassung (7) zusätzlich eine konische Oberfläche (7c) umfasst, die zum Zusammenwirken mit entsprechenden konischen Oberflächen (1b, 2b) angeordnet ist, welche innerhalb der Bohrungen angeordnet sind, wobei die konischen Oberflächen (1b, 2b, 7c) im Durchmesser zum geschlossenen Ende der Bohrung hin abnehmen.

2. Verbindungsanordnung nach Anspruch 1, **dadurch gekennzeichnet, dass** das erste Ende (5) des Schraubenbolzens (3) zwischen der Adapterfassung (7) und dem Gewindeteil (5a) ein Flanschmittel (6) umfasst, das zum Zusammenwirken mit dem entsprechenden Ende der Adapterfassung (7) beim Freigeben der Sperrung der Verbindungsanordnung angeordnet ist.

3. Verbindungsanordnung nach Anspruch 2, **dadurch gekennzeichnet, dass** die axiale Abmessung der Adapterfassung (7) geringfügig kürzer als der Abstand zwischen dem Erweiterungsteil (4) des Schraubenbolzens und dem Flanschmittel (6) ist, sodass ein axialer Freiraum zwischen der Adapterfassung (7) und dem Schraubbolzen (3) ausgebildet ist, wobei sich der Freiraum während des Sperrens und Freigebens der Verbindungsanordnung auf unterschiedlichen Seiten der Adapterfassung (7) befindet.

4. Verbindungsanordnung nach einem der vorhergehenden Ansprüche, **dadurch gekennzeichnet, dass** die Adapterfassung (7) zumindest zwei Teile (7', 7") umfasst, die in radialer Richtung um den Schraubenbolzen (3) angeordnet sind und zusammen einen Kegelstumpf ausbilden.

5. Schraubenbolzen (3) in einer Verbindungsanordnung nach einem der vorhergehenden Ansprüche, **dadurch gekennzeichnet, dass** sein erstes Ende (5) mit einem Gewindeteil (5a) versehen ist und sein zweites, gegenüberliegendes Ende ein Erweiterungsteil (4) umfasst, welches Eingriffsmittel (4a) für ein geeignetes Werkzeug zum Übertragen von Drehmoment auf den Schraubenbolzen (3) aufweist und mit einer radial verlaufenden Führungsfläche (4b) versehen ist, dass er mit einer Adapterfassung (7) versehen ist, die zwischen dem ersten und zweiten Ende angeordnet ist, und die Ummantelung davon eine konische Oberfläche (7c) umfasst, die derart angeordnet ist, dass ihr Durchmesser zum ersten Ende (5) des Schraubenbolzens (3) hin abnimmt, wobei die Adapterfassung (7) eine radial verlaufende Eingriffsfläche (7a) für den Schraubenbolzen (3) zumindest in einem Ende umfasst, und dass ein Flanschmittel (6) im ersten Ende (5) zwischen dem Gewindeteil (5a) und der Adapterfassung (7) angeordnet ist und eine Führungsfläche (6a) für die Adapterfassung (7) aufweist.

6. Schraubenbolzen nach Anspruch 5, **dadurch gekennzeichnet, dass** die axiale Abmessung der Adapterfassung (7) geringfügig kürzer als der Abstand zwischen dem Erweiterungsteil (4) des Schraubenbolzens und dem Flanschmittel (6) ist, sodass ein axialer Freiraum zwischen der Adapterfassung (7) und dem Schraubbolzen (3) ausgebildet ist.

7. Schraubenbolzen nach einem der Ansprüche 5 oder 6, **dadurch gekennzeichnet, dass** die Adapterfassung (7) zumindest zwei Teile (7', 7") umfasst, die radial um den Schraubenbolzen (3) angeordnet sind.

8. Schraubenbolzen nach Anspruch 7, **dadurch gekennzeichnet, dass** die Ummantelungsfläche (7c) der Teile (7', 7") der Adapterfassung eine senkrecht zum Schraubenbolzen verlaufende Nut umfasst, wobei ein Sperrring (9) oder dergleichen in der Nut zum Zusammenhalten der Teile (7', 7") des Schraubenbolzens (3) während der Einrichtung eingerichtet ist.

## Revendications

1. Agencement de connexion pour connecter et verrouiller des éléments mécaniques ou similaire l'un à l'autre, dans lequel le premier élément mécanique (1) comprend un alésage (1a) s'étendant à travers celui-ci et le second élément mécanique (2) comprend un alésage (2a) fermé sur sa seconde extrémité, et dans lequel les alésages sont agencés pour la mise en place d'un boulon de verrouillage (3) ou similaire présentant une douille adaptatrice (7) à l'intérieur, sachant que le boulon de verrouillage (3) est essentiellement agencé à l'intérieur de la douille adaptatrice (7), **caractérisé en ce que** la première extrémité (5) du boulon de verrouillage (3) dans le côté de l'alésage fermé, est dotée d'une partie filetée (5a) pour la connexion vers l'intérieur de l'alésage fermé (2a), la partie filetée (5a) étant agencée pour être utilisée à la fois pendant le verrouillage et la libération de l'agencement de connexion, la seconde extrémité du boulon de verrouillage (3) étant dotée d'une pièce d'expansion (4) présentant un moyen d'engagement (4a) pour un outil approprié pour transmettre un couple au boulon de verrouillage (3) ainsi qu'une surface-guide (4b) agencée pour agir dans la position verrouillée de l'agencement de connexion sur une surface d'engagement s'étendant radialement (7a) de l'extrémité correspondante de la douille adaptatrice (7) et **en ce que** l'enveloppe de la douille adaptatrice (7) comprend en outre une surface conique (7c) agencée pour coopérer avec des surfaces coniques correspondantes (1b, 2b) agencées à l'intérieur des alésages, ce par quoi les surfaces coniques (1b, 2b, 7c) ont un diamètre décroissant en direction de l'extrémité fermée de l'alésage.

2. Agencement de connexion selon la revendication 1, **caractérisé en ce que** la première extrémité (5) du boulon de verrouillage (3) entre la douille adaptatrice (7) et la partie filetée (5a) comprend un moyen de bride (6) agencé pour coopérer avec l'extrémité correspondante de la douille adaptatrice (7) lorsque le verrouillage de l'agencement de connexion est libéré.

3. Agencement de connexion selon la revendication 2, **caractérisé en ce que** la dimension axiale de la douille adaptatrice (7) est légèrement plus courte que la distance entre la pièce d'expansion (4) du boulon de verrouillage et le moyen de bride (6), de sorte qu'un dégagement axial est formé entre la douille adaptatrice (7) et le boulon de verrouillage (3), le dégagement étant sur différents côtés de la douille adaptatrice (7) pendant le verrouillage et la libération de l'agencement de connexion.

4. Agencement de connexion selon l'une quelconque des revendications précédentes, **caractérisé en ce que** la douille adaptatrice (7) comprend au moins deux parties (7', 7") agencées en direction radiale autour du boulon de verrouillage (3) et qui forment ensemble un cône tronqué.

5. Boulon de verrouillage (3) dans un agencement de connexion selon l'une quelconque des revendications précédentes, **caractérisé en ce que** sa première extrémité (5) est dotée d'une partie filetée (5a) et sa seconde extrémité opposée comprend une pièce d'expansion (4) présentant un moyen d'engagement (4a) pour un outil approprié pour transmettre un couple au boulon de verrouillage (3) et est dotée d'une surface-guide (4b) s'étendant radialement, qu'il est doté d'une douille adaptatrice (7) agencée entre les première et seconde extrémités et dont l'enveloppe extérieure comprend une surface conique (7c) agencée de façon à avoir un diamètre décroissant en direction de la première extrémité (5) du boulon de verrouillage (3), la douille adaptatrice (7) comprenant une surface d'engagement s'étendant radialement (7a) pour le boulon de verrouillage (3) au moins dans une extrémité, et qu'un moyen de bride (6) est agencé dans la première extrémité (5) entre la partie filetée (5a) et la douille adaptatrice (7) et présentant une surface-guide (6a) pour la douille adaptatrice (7).

6. Boulon de verrouillage selon la revendication 5, **caractérisé en ce que** la dimension axiale de la douille adaptatrice (7) est légèrement plus courte que la distance entre la pièce d'expansion (4) du boulon de verrouillage et le moyen de bride (6), de sorte qu'un dégagement axial est formé entre la douille adaptatrice (7) et le boulon de verrouillage (3).

7. Boulon de verrouillage selon la revendication 5 ou 6, **caractérisé en ce que** la douille adaptatrice (7) comprend au moins deux parties (7', 7") agencées radialement autour du boulon de verrouillage (3).

8. Boulon de verrouillage selon la revendication 7, **caractérisé en ce que** la surface de l'enveloppe (7c) des parties (7', 7") de la douille adaptatrice comprend une rainure perpendiculaire au boulon de verrouillage, avec un anneau de blocage (9) ou similaire placé dans la rainure pour maintenir les parties (7', 7") du boulon de verrouillage (3) ensemble pendant l'installation.
